# EUROPEAN PATENT SPECIFICATION

(11) **EP 2 596 601 B1**
(45) Date of publication and mention of the grant of the patent: **30.03.2016**
(21) Application number: 10751876.3
(22) Date of filing: 23.08.2010
(51) Int. Cl.: H04L 12/24, H04L 12/70

(54) **LOGGING CONTROL PLANE EVENTS**
AUFZEICHNUNG VON STEUEREBENENEREIGNISSEN
JOURNALISATION D'ÉVÉNEMENTS D'UN PLAN DE COMMANDE

(30) Priority: 23.07.2010 EP 10170580
(43) Date of publication of application: 29.05.2013
(73) Proprietor: Telefonaktiebolaget LM Ericsson (publ), 164 83 Stockholm (SE)
(72) Inventor: REBELLA, Paolo, I-17028 Bergeggi (IT); CECCARELLI, Daniele, I-16145 Genova (IT); CAVIGLIA, Diego, I-17100 Savona (IT)
(74) Representative: Bruce, Alexander Richard Henry
(86) International application number: PCT/EP2010/062267
(87) International publication number: WO 2012/010219

(56) References cited:
- US-A1- 2005 089 016
- US-A1- 2006 059 270
- US-A1- 2007 177 523
- MANNIE E ET AL: "Generalized Multi-Protocol Label Switching (GMPLS) Architecture; rfc3945.txt", 20041001, 1 October 2004 (2004-10-01), XP015009717, ISSN: 0000-0003

## Description

**Technical Field:** This invention relates to nodes for a communications network and having an event logger, to log servers, to methods of logging events, and to corresponding computer programs.

### Background:

It is known to have transport networks having control planes distributed across nodes of the network. Generalized MultiProtocol Label Switching (GMPLS) is a suite of protocols for implementing one type of control plane and is currently the Operators preferred choice for control planes for transport networks. GMPLS is specified by the Internet Engineering Task Force (IETF) specifically by the Common Control and Measurement Plane (CCAMP).

Most of the efforts in CCAMP are focused on specifying protocol extensions for signaling (RSVP-TE) routing (OSPF-TE) and link management (LMP) protocols while very few specification efforts have been put on GMPLS management specifications.

It is important to note that GMPLS has been specified for controlling all the transport technologies such as SONET/SDH, DWDM, OTN and is to be the specification for MPLS-TP.

The only specified protocols and data model to manage GMPLS is Simple Network Management Protocol (SNMP). SNMP, as the name clearly indicates, is well suited for management of simple networks. Its usage in transport networks does enable an operator to gather information about events at many nodes, and manage/trace and troubleshoot a GMPLS based control plane for transport networks, but the complexity of the protocols and the many events taking place in rapid succession can make such trouble shooting difficult in practice.

US 2007/0177523 describes a network monitoring apparatus including a collecting unit that collects information on a network, a receiving unit that receives a notification indicating that an event has occurred on an element of the network, and an analysing unit that analyses correlation between one received notification and another received notification.

### Summary:

An object of the invention is to provide improved apparatus or methods. According to a first aspect, the invention provides:
A node for a communications network having a control plane distributed across multiple nodes, the node having a controller arranged to run protocols of the control plane and an event logger for logging events in the operation of the control plane protocols at the node. A local timing reference in the node is synchronised to a common network clock, and an interface is provided for the event logger to communicate with an external log server at a different location. The event logger is arranged to use the local timing reference to determine a time for each logged event and to send an indication to the external log server of the logged events and their times.

One effect of indicating times of events based on a common network clock is that it can enable the log server to determine a relative timing of events at different nodes more accurately, and thus facilitate tracing of events through the network to establish causes and effects of faults for example.

Another aspect of the invention can involve a log server for a communications network having a control plane distributed across multiple nodes of the network, the log server having interfaces to more than one of the nodes, to receive indications of events logged at those nodes in the operation of protocols of the control plane, and the times of those events according to a common network clock. The log server has a store for storing the received indications and a presentation control part for determining a time sequence of the events logged at different nodes according to their indicated times, and presenting the sequence of events to an operator.

Another aspect provides a method of logging events at multiple nodes of a communications network having a control plane distributed across the nodes, involving logging events in the operation of the control plane at the nodes, and determining a time of each event using a local timing reference synchronised to a common network clock. Indications are sent from the nodes to a log server of the events logged at the nodes and the times of the events.

Any additional features can be added to these aspects, or disclaimed from them, and some are described in more detail below. Any of the additional features can be combined together and combined with any of the aspects. Other effects and consequences will be apparent to those skilled in the art, especially over compared to other prior art. Numerous variations and modifications can be made without departing from the claims of the present invention. Therefore, it should be clearly understood that the form of the present invention is illustrative only and is not intended to limit the scope of the present invention.

### Brief Description of the Drawings:

How the present invention may be put into effect will now be described by way of example with reference to the appended drawings, in which:
Fig. 1 shows a schematic view of a node according to an embodiment,
Fig. 2 shows a schematic view of a time chart of operations according to an embodiment,
Fig. 3 shows steps according to an embodiment,
Fig. 4 shows a schematic view of a log server according to an embodiment,
Fig. 5 shows steps of operation of a log server according to an embodiment,
Fig. 6 shows steps by an operator,
Fig 7 shows a schematic view of a node according to an embodiment, and
Figs 8 to 11 show examples of network architectures according to embodiments.

### Detailed Description:

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

### Definitions

Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps.

Elements or parts of the described nodes or networks may comprise logic encoded in media for performing any kind of information processing. Logic may comprise software encoded in a disk or other computer-readable medium and/or instructions encoded in an application specific integrated circuit (ASIC), field programmable gate array (FPGA), or other processor or hardware.

References to nodes can encompass any kind of switching node, not limited to the types described, not limited to any level of integration, or size or bandwidth or bit rate and so on.

References to software can encompass any type of programs in any language executable directly or indirectly on processing hardware.

References to hardware, processors, processing hardware or circuitry can encompass any kind of logic or analog circuitry, integrated to any degree, and not limited to general purpose processors, digital signal processors, ASICs, FPGAs, discrete components or logic and so on.

References to control planes are intended to encompass any suite of protocols for automatic control of a network by means of communication between the nodes.

### Introduction

By way of introduction to the embodiments, some issues with conventional designs will be explained. It has been found that troubleshooting using SNMP has drawbacks as follows:
- NE to Network Management System (NMS) notifications are sent in an unreliable manner.
- Not all the GMPLS protocols extensions are covered by SNMP. Most of the needed Management Information Bases (MIBs) are not defined.
- There is no way to temporally correlate SNMP traps related to different nodes of the same LSP. This makes troubleshooting very hard.
- The traffic generated by a GMPLS suite of protocols is characterized by a low traffic load of control plane messages during normal network functioning and high peaks of control plane traffic during recovery operations (e.g. failure, maintenance). Such bursts of control plane traffic tends to over load the DCN (Data Connection Network). As SNMP trap messages have a low priority, they may be lost due to the overloading.

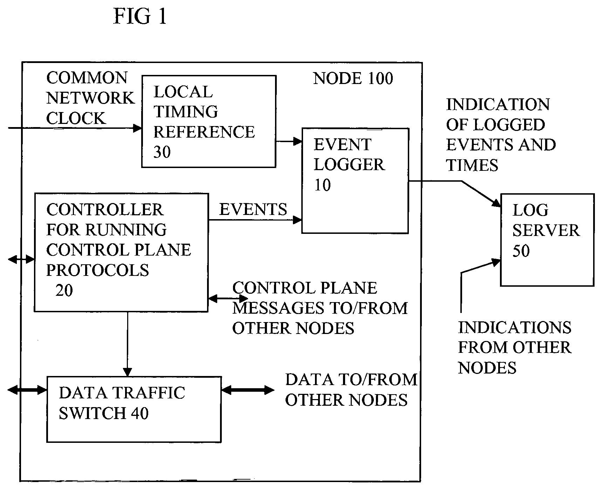

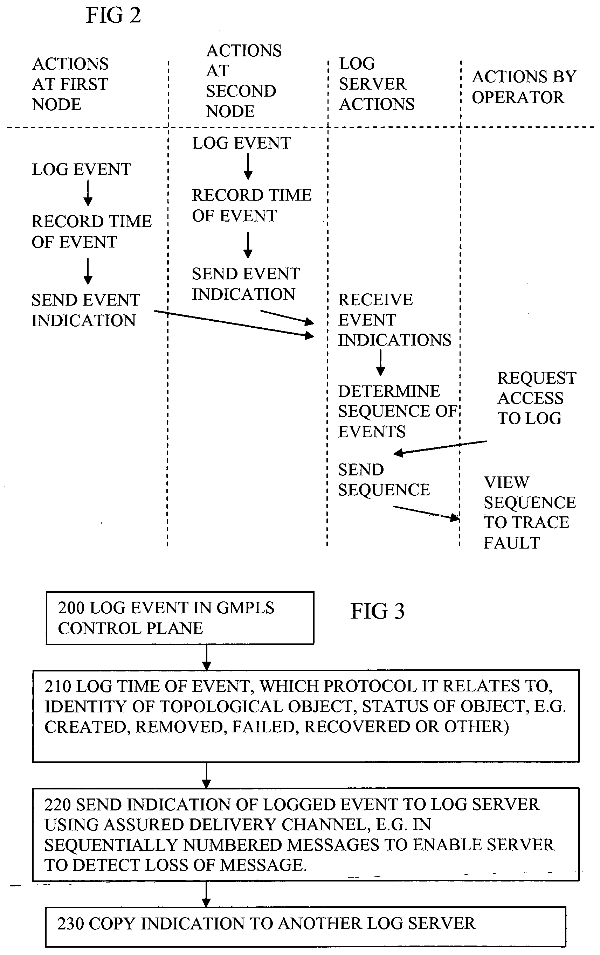

### Figs 1, 2 a first embodiment of the invention

Figure 1 shows a schematic view of a node 100 having a number of features. The node can have many other features. A data traffic switch 40 handles data traffic to or from other nodes of the network, or add/drop traffic. A controller 20 controls the data traffic switch by running protocols of the control plane. This can involve exchanging control information such as messages with other controllers of other nodes. Events occurring in the running of the protocols are logged by an event logger 10, coupled to the controller. A local timing reference 30 is provided to enable a timing of the events to be logged. The local timing reference is synchronized to a common network clock. This can be achieved using a timing network which can be implemented in a number of ways as would be known to those skilled in the art. The event logger is coupled via an interface to an external log server 50 so that the event logger can send an indication to the log server of logged events and times of the events based on the common network clock. As shown, the log server can gather indications from other nodes. This can enable the log server to correlate the events at different nodes, for presentation to an operator or for other purposes. Such correlation enables a sequence of the events to be established, which can make trouble shooting much easier, since causes and effects of events can be seen more easily.

Figure 2 shows a sequence chart of actions involved in logging events occurring in the control plane according to an embodiment. Time flows down the figure. In a left column are shown actions at a first node. A next column shows actions at a second node. A next column shows actions at the log server. A right hand column shows actions by an operator.

As shown, an event is logged at the first node, a time of the event is recorded, based on the common network clock. An indication of the event and its timing is sent to the log server. There may be many of these steps, only one is shown for clarity. Similarly, an event is logged at the second node, a time of the event is recorded, based on the common network clock. An indication of the event and its timing is sent to the log server. Again, there may be many of these steps, only one is shown for clarity.

At the log server, the indications are received, and a sequence of events can be determined by comparing the timings. The operator can request access to the log, and in response, the log server can present the requested sequence of events, for the operator to view to trace a fault for example, or analyse for other reasons.

### Additional features of some embodiments

In some embodiments, the event logger is arranged to send also an indication of which of the protocols (320, 350, 360) each event relates to. An effect of indicating the protocol is to provide more relevant information to the log server, further facilitating tracing of events through the network. The event logger can of course be arranged to log other events, not directly related to the control plane protocols, such as for example hardware events such as overheating, power failure, over voltage, fan problems, tamper alarms or other events.

In some embodiments, the event logger is arranged to send the indication using an assured delivery channel (330). This can also facilitate such tracing of events, as there is a higher level of confidence that the log server has a complete record of all the events. The sending of the indications can be implemented in various ways. For example the known TCP protocol can be used as it is reliable and can avoid congestion. The TCP protocol can be used over a DCN network. This can make use of either an out of band portion of the same channels along fibers used for the payload traffic of the network, or separate physical paths using separate fibers or other networks can be used.

In some embodiments the event logger is arranged to send also an indication of an identity of a topological object to which the events relate, and comprising a status indication of the object as being created, removed, failed or recovered from fail. Again, an effect of this indication is to provide more information to facilitate tracing of events. In some embodiments the event logger is arranged to send the indication to more than one log server. An effect of this is that redundancy can be provided which can be more reliable than sending to one log server and relying on that log server to copy it to another log server.

In some embodiments the control plane is a GMPLS control plane. The event logging is particularly applicable to such GMPLS control planes as there can be many events in different protocols at nearly the same time, making it difficult to troubleshoot. Another possibility is an MPLS control plane which uses different protocols which are technology specific, for IP packets.

In some embodiments of the log server, it can be arranged to copy the received indications to another log server. An effect of this is that redundancy can be provided more efficiently with lower communication overhead than if each node has to send their indications to two or more of the log servers.

In some embodiments the log server can be located at a data connection network server. This has the effect of enabling existing interfaces and communications channels to be used for sending the indications and for accessing the log server.

In some embodiments the log server can be located at one of the nodes. An effect of this is to avoid the need for a separate location and avoid the need for further communications channels to that separate location, to reduce costs.

In some embodiments, the log server can be distributed across more than one location. This can enable the locations to be chosen to reduce the distances for sending the indications for example, or to group the nodes for other purposes.

At least some of the drawbacks of SNMP can be addressed by embodiments using a lightweight and reliable client/server based architecture for the management of GMPLS enabled networks, called NetLog in the following. This architecture also defines a protocol for the collection and correlation of all the information related to the GMPLS operations. The information can be encoded to keep confidentiality and can be compressed to save transmission bandwidth. A Network Timing Protocol (NTP) is used to synchronize the clock of all the involved entities that is the server and the clients.

### GMPLS Relevant information model

The relevant information to be logged can be split into two main different categories: Topology and LSP information for each event as follows, some or all of this information can be indicated as appropriate:

### Topology information to be indicated:

- TE-link: a Traffic Engineering link describes the relationship between a couple of adjacent interfaces. Its characteristics are described by LMP, OSPF-TE and RSVP-TE modules.
- Adjacency: relationship between two neighboring nodes. This is described by an LMP module.
- Control Channel: communication channel for supervision and management of the TE-link. This is managed by an LMP module.
- Control Interface: physical interfaces where control channels are originated and terminated. This is managed by an LMP module.
- Link Component: traffic units composing a TE-link. This is managed by an LMP module.
- OSPF area: administrative domain that identifies all the equipments that share
- the same set of routing information.
- Domain: administrative domain that identifies all the equipments that share a common control plane

### LSP information to be indicated:

1. LSP: elementary end-to-end path. This is managed by the RSVP-TE protocol.
2. Tunnel: set of LSPs originating and terminating on the same equipments that belong to the same protection schema. This is managed by the RSVP-TE protocol.
3. Call: set of stitched tunnels across different areas. This is managed by the RSVP-TE protocol.

### Fig 3, steps according to another embodiment

Figure 3 shows steps in logging events according to an embodiment as follows, there can be many other steps not shown. At step 200, an event occurring in the running of the control plane protocols is logged. At step 210, a time of the event is logged, together with which of the protocols it relates to, an identity of topological object, status of object, e.g. created, removed, failed, recovered or other status. At step 220 an indication of the logged event is sent to the log server using an assured delivery channel, e.g. in sequentially numbered messages to enable the server to detect a loss of message. The messages can be encrypted if needed. At step 230 a copy of this indication is sent to another log server, for redundancy. The process can continue for many events.

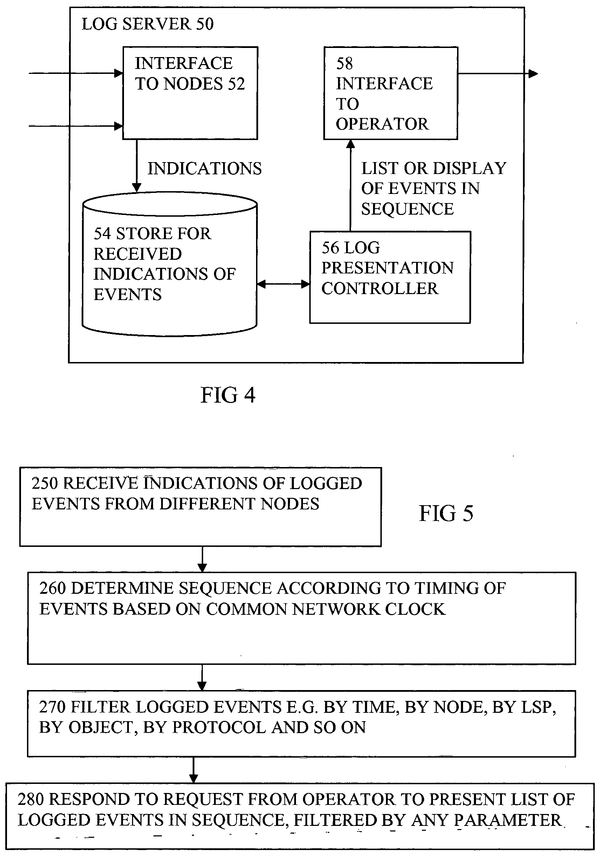

### Figs 4,5, Log server according to an embodiment.

Figure 4 shows a schematic view of features of a log server 50, other features may be present. An interface 52 is provided to receive indications from the nodes. The indications are stored in a store 54. A log presentation controller 56 is able to access the store to process the indications and to process operator requests for information. An interface 58 to the operator is provided. This can be implemented in many ways, from a display device to a web interface for example, to enable remote access by operators.

Figure 5 shows steps in operating a log server as shown in figure 4 or other embodiments. At step 250 indications of logged events are received from different nodes. At step 260 a sequence of the events is determined according to timing of events based on the common network clock. At step 270 logged events are filtered e.g. by time, by node, by LSP, by object, by protocol and so on. At step 280 the server responds to a request from an operator to present a list of logged events in sequence, filtered by any parameter.

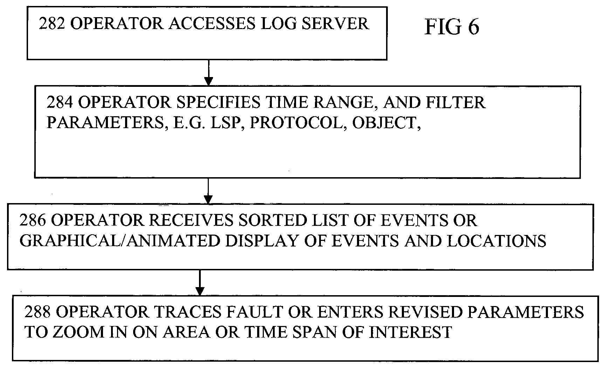

### Fig 6, operator actions according to _an embodiment

Figure 6 shows steps taken by an operator according to an embodiment. Other steps may be added. At step 282 the operator accesses the log server, and at step 284 specifies time range, and filter parameters, e.g. LSP, protocol, object or objects in the topology. At step 286 the operator receives from the log server a sorted list of events or graphical/animated display of events and locations. This can be sent as a web page for example or displayed for the operator to view. At step 288, the operator analyses the log to trace a fault or enters revised parameters to zoom in on an area or time span of interest.

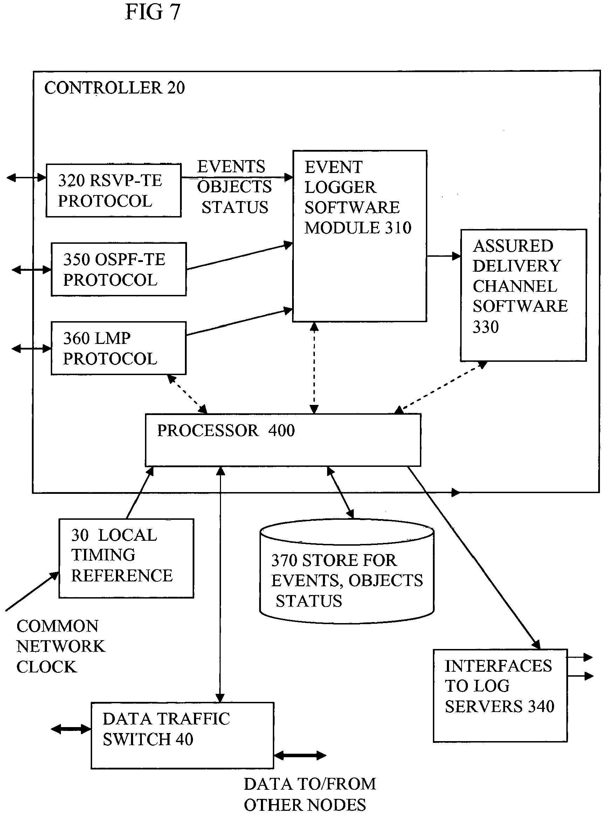

### Fig 7, Node implementation

Figure 7 shows a schematic view of features of a node according to an embodiment. Other features can be added. The controller 20 has a processor 400 which runs a number of software modules. In this case the event logger is implemented in the form of a software module 310 run by the same processor as used for the controller. A number of control plane protocols are shown, to be run by the processor. The protocols shown are RSVP-TE, 320 OSPF-TE 350, and LMP, 360. The processor is shown coupled to the data traffic switch 40. Events occurring as any of these protocols are being run, can be logged by the event logger, and other information about the event can be obtained from other software modules as needed. The event logger sends indications to the log servers using assured delivery channel software 330 run by the processor, and over physical interfaces 340 coupled to the processor. The processor is also coupled to a store 370 for events, objects and status for example. The assured delivery channel software can assure the delivery in various different ways. One example is to have sequence numbers for each message so that a receiver can check whether all the numbers in the sequence have been received.

The event logger can be arranged to delay sending the indications to the log server until any peak in the network load has passed. This is in contrast to the conventional SNMP traps which are sent without delay, and therefore may be lost if they coincide with a peak.

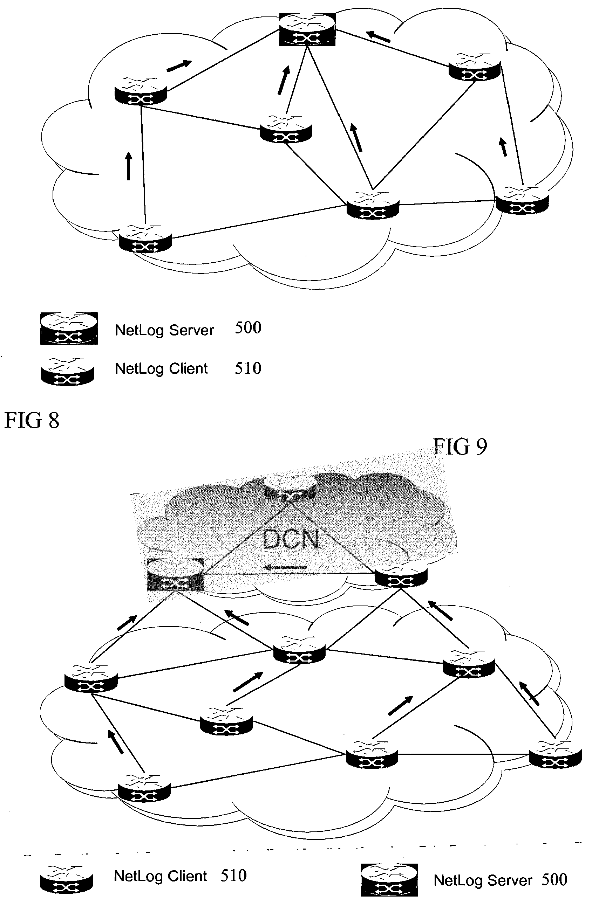

### Figs 8 to 11, NetLog Architecture

The architecture of the NetLog can be based on a number of features as follows:
- Client/Server approach - A NetLog client runs on each NE and one (or more) NetLog servers run on one (or more) designated NEs or separate servers connected to the DCN of the GMPLS network. The collection procedure can be either centralized (single server) or distributed (different servers, each with a set of clients associated in order to reduce the traffic load on the server and on the DCN). A typical location for the NetLog server, in case of centralized approach, is the collocation within the NMS server. Various NetLog Scenarios can be envisaged as explained in the next section.
- NE synchronization - All the NEs are in sync with each other and with the NetLog server. Due to the high level of dynamicity of the GMPLS environment a very accurate sync mechanism (higher than 1ms) is needed.
- Data encoding, compression and encryption mechanisms used to deliver logging messages in a light (bandwidth saving) and secure way.
- A light and reliable protocol for the delivery of the synchronized logging messages to the NetLog server.
- A correlation mechanism running on the server (in case of centralized collection) or on the main server (in case of distributed collection) used to make collected data human readable in order to speed up troubleshooting and maintenance procedures. The correlation mechanism is always centralized.

Four different architectural scenarios can be identified, based on the number and type of NetLog Server used, as follows.

Figure 8 shows a network of nodes in a cloud. At each node there is an event logger in the form of a netlog client 510 shown as an oval symbol. One of the nodes has a log server in the form of a NetLog server 500 shown as a rectangular symbol. As shown by the arrows, each of the NetLog clients sends event indications up to the netlog server.

The Netlog server in this case can be implemented as a piece of software run by the same processor as to used to run the event logger. Alternatively it could be implemented as a separate processor on a different card or shelf.

Figure 9 shows an alternative architecture. There is a network of nodes in an upper cloud coupled by links of a Data Communications network DCN. Different ones of the event loggers at the nodes are coupled to different ones of the nodes of the DCN network. One of the DCN nodes has the log server. A DCN node is typically a router coupled to several of the nodes of the transport network via gateways. By having the log server in the DCN network, it can be coupled to event loggers using existing channels of the DCN network, to save costs.

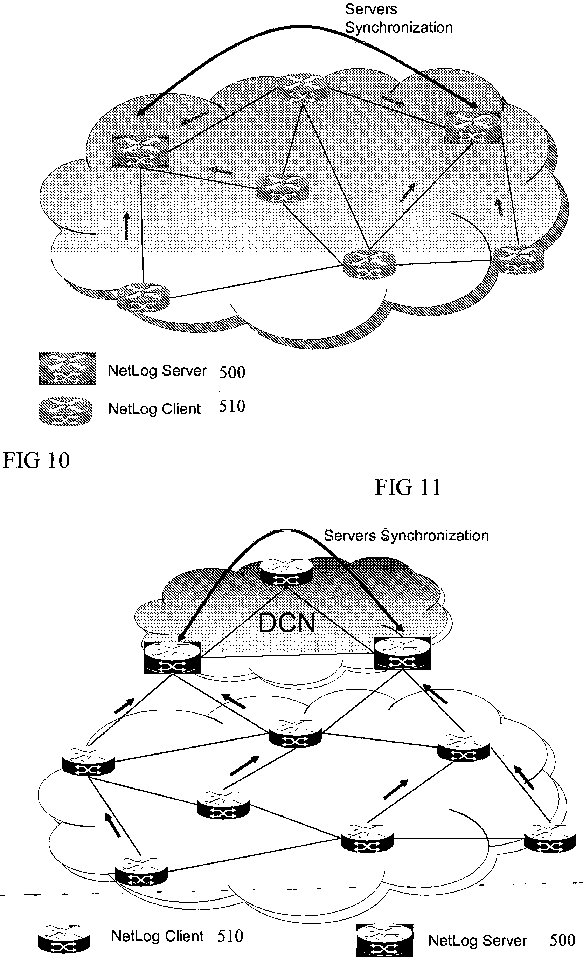

Figure 10 shows another architecture in which two log servers are shown located at different nodes of the network. A synchronization arrow is shown to indicate the ability of log servers to copy indications to each other. Such duplication for redundancy can be carried out either by the event loggers sending to more than one log server, or by the log servers copying to each other.

Figure 11 shows another architecture in which two log servers are shown located at different nodes of the DCN network. They can be synchronized with each other by copying indications.

As has been described, a node (100) for a communications network has a control plane distributed across multiple nodes, the node having a controller (20) arranged to run protocols of the control plane and an event logger (10) for logging events in the operation of the control plane protocols at the node. A local timing reference (30) in the node is synchronised to a common network clock, and an interface is provided for the event logger to communicate with an external log server at a different location. The event logger is arranged to use the local timing reference to determine a time for each logged event and to send an indication to the external log server of the logged events and their times. By timing events based on a common network clock, the log server can then determine a relative timing of events at different nodes more accurately, and thus facilitate tracing of events through the network.

Other variations and embodiments can be envisaged within the claims.

## Claims

1. A node for a communications network having a GMPLS control plane distributed across multiple nodes, the node having:
a controller (20) arranged to run protocols of the GMPLS control plane an event logger (10) for logging events in the operation of the GMPLS control plane protocols at the node,
a local timing reference (30) synchronised to a common network clock, and
an interface for the event logger to communicate with an external log server at a different location,
the event logger being arranged to use the local timing reference to determine a time for each logged event and to send an indication to the external log server of the logged events and their times;
wherein the external log server (50) is also synchronised to the common network clock;
wherein the event logger is arranged to send also an indication of which of the protocols (320, 350, 360) of the GMPLS control plane each event relates to.

2. The node of claim 1, the event logger being arranged to send the indication using an assured delivery channel (330).

3. The node of any preceding claim, the event logger being arranged to send also an indication of an identity of a topological object to which the events relate, and comprising a status indication of the object as being created, removed, failed or recovered from fail.

4. The node of any preceding claim, the event logger being arranged to send the indication to more than one log server.

5. A log server (50) for a communications network having a GMPLS control plane distributed across multiple nodes of the network, wherein each node has a local timing reference synchronised to a common network clock, GMPLS the log server having:
interfaces (52) to more than one of the nodes, to receive indications of events logged at those nodes in the operation of protocols of the GMPLS control plane, and the times of those events according to the common network clock, and an indication of which of the protocols (320, 350, 360) of the GMPLS control plane each event relates to;
a store (54) for storing the received indications, and
a presentation control part (56) for determining a time sequence of the events logged at different nodes according to their indicated times, and presenting the sequence of events to an operator,
wherein the external log server (50) is also synchronised to the common network clock.

6. The log server of claim 5, arranged to copy (230) the received indications to another log server.

7. The log server of claim 5 or 6 being located at a data connection network server.

8. The log server of claim 5 or 6, being located at one of the nodes.

9. The log server of any of claims 5 to 8, being distributed across more than one location.

10. A method of logging events at multiple nodes of a communications network having a GMPLS control plane distributed across the nodes, the method having the steps of:
logging (200) events in the operation of the GMPLS control plane at the nodes,
determining a time (210) of each event using a local timing reference synchronised to a common network clock, and
sending (220) indications from the nodes to a log server of the events logged at the nodes and the times of the events, said log server being at a different location;
wherein the external log server (50) is also synchronised to the common network clock; and
sending an indication of which of the protocols (320, 350, 360) of the GMPLS control plane each event relates to.

11. The method of claim 10 having the further steps of receiving (250) the indications at the log server, and
determining (260) a time sequence of the events logged at different nodes according to their indicated times.

12. A computer program on a computer readable medium having instructions which when executed by a computer cause the computer to carry out the method of claim 10.

## Patentansprüche

1. Knoten für ein Kommunikationsnetz mit einer GMPLS-Steuerebene verteilt über mehrere Knoten, wobei der Knoten aufweist:
eine Steuerung (20), die so ausgelegt ist, dass sie Protokolle der GMPLS-Steuerebene ausführt;
einen Ereignisprotokollierer (10) zum Protokollieren von Ereignissen bei der Ausführung der Protokolle der GMPLS-Steuerebene am Knoten;
eine lokale Taktreferenz (30), die mit einem gemeinsamen Netztakt synchronisiert ist; und
eine Schnittstelle für den Ereignisprotokollierer zum Kommunizieren mit einem externen Protokollserver an einem anderen Ort,
wobei der Ereignisprotokollierer so ausgelegt ist, dass er die lokale Taktreferenz verwendet, um eine Zeit für jedes protokollierte Ereignis zu bestimmen, und eine Anzeige der protokollierten Ereignisse und ihrer Zeiten an den externen Protokollserver sendet;
wobei der externe Protokollserver (50) ebenfalls mit dem gemeinsamen Netztakt synchronisiert ist;
wobei der Ereignisprotokollierer so ausgelegt ist, dass er auch eine Anzeige dessen sendet, auf welches von den Protokollen (320, 350, 360) der GMPLS-Steuerebene sich jedes Ereignis bezieht.

2. Knoten nach Anspruch 1, wobei der Ereignisprotokollierer so ausgelegt ist, das er die Anzeige unter Verwendung eines gesicherten Zustellkanals (330) sendet.

3. Knoten nach einem der vorhergehenden Ansprüche, wobei der Ereignisprotokollier so ausgelegt ist, dass er auch eine Anzeige einer Identität eines topologischen Objekts sendet, auf welches sich die Ereignisse beziehen, und umfassend eine Statusanzeige des Objekts, wenn es erzeugt oder entfernt wird oder ausfällt oder von einem Ausfall wiederhergestellt wird.

4. Knoten nach einem der vorhergehenden Ansprüche, wobei der Ereignisprotokollierer so ausgelegt ist, das er die Anzeige an mehr als einen Protokollserver sendet.

5. Protokollserver (50) für ein Kommunikationsnetz mit einer GMPLS-Steuerebene verteilt über mehrere Knoten des Netzes, wobei jeder Knoten eine lokale Taktreferenz aufweist, die mit einem gemeinsamen Netztakt synchronisiert ist, und der Protokollserver aufweist:
Schnittstellen (52) zu mehr als einem der Knoten, um Anzeigen von Ereignissen, die an diesen Knoten bei der Ausführung von Protokollen der GMPLS-Steuerebene protokolliert werden, und die Zeiten dieser Ereignisse gemäß dem gemeinsamen Netztakt sowie eine Anzeige dessen zu empfangen, auf welches der Protokolle (320, 350, 360) der GMPLS-Steuerebene sich jedes Ereignis bezieht;
einen Speicher (54) zum Speichern der empfangenen Anzeigen, und
einen Darstellungssteuerteil (56) zum Bestimmen einer Zeitfolge der an verschiedenen Knoten protokollierten Ereignisse gemäß ihren angezeigten Zeiten und Darstellen der Folge von Ereignissen für einen Betreiber,
wobei der externe Protokollserver (50) ebenfalls mit dem gemeinsamen Netztakt synchronisiert ist.

6. Protokollserver nach Anspruch 5, der so ausgelegt ist, dass er die empfangenen Anzeigen auf einen anderen Protokollserver kopiert (230).

7. Protokollserver nach Anspruch 5 oder 6, der sich an einem Datenverbindungsnetzserver befindet.

8. Protokollserver nach Anspruch 5 oder 6, der sich an einem der Knoten befindet.

9. Protokollserver nach einem der Ansprüche 5 bis 8, der über mehr als einen Ort verteilt ist.

10. Verfahren zur Protokollierung von Ereignissen an mehreren Knoten eines Kommunikationsnetzes mit einer GMPLS-Steuerebene verteilt über die Knoten, wobei das Verfahren die folgenden Schritte aufweist:
Protokollieren (200) von Ereignissen bei der Ausführung der GMPLS-Steuerebene an den Knoten;
Bestimmen einer Zeit (210) jedes Ereignisses unter Verwendung einer lokalen Taktreferenz, die mit einem gemeinsamen Netztakt synchronisiert ist, und
Senden (220) von Anzeigen der an den Knoten protokollierten Ereignisse und der Zeiten der Ereignisse von den Knoten an einen Protokollserver, wobei der Protokollserver an einem anderen Ort ist, wobei der externe Protokollserver (50) ebenfalls mit dem gemeinsamen Netztakt synchronisiert ist; und
Senden einer Anzeige dessen, auf welches von den Protokollen (320, 350, 360) der GMPLS-Steuerebene sich jedes Ereignis bezieht.

11. Verfahren nach Anspruch 10 mit den weiteren Schritten des Empfangens (250) der Anzeigen am Protokollserver, und
Bestimmens (260) einer Zeitfolge der an verschiedenen Knoten protokollierten Ereignisse gemäß ihren angezeigten Zeiten.

12. Computerprogramm auf einem computerlesbaren Medium mit Anweisungen, die bei Ausführung durch einen Computer den Computer veranlassen, das Verfahren nach Anspruch 10 auszuführen.

## Revendications

1. Noeud pour un réseau de communication comportant un plan de commande GMPLS réparti sur plusieurs noeud, le noeud comprenant :
un organe de commande (20) agencé pour exécuter des protocoles du plan de commande GMPLS ;
un enregistreur d'événements (10) pour enregistrer des événements dans le fonctionnement des protocoles de plan de commande GMPLS au niveau du noeud,
une référence de timing locale (30) synchronisée avec une horloge de réseau commune, et
une interface pour permettre à l'enregistreur d'événements de communiquer avec un serveur de journal externe à un emplacement différent,
l'enregistreur d'événements étant agencé pour utiliser la référence de timing locale pour déterminer un temps pour chaque événement enregistré et pour envoyer une indication au serveur de journal externe en ce qui concerne les événements enregistrés et leurs temps ;
dans lequel le serveur de journal externe (50) est également synchronisé avec l'horloge de réseau commune;
dans lequel l'enregistreur d'événement est agencé pour envoyer également une indication du protocole (320, 350, 360) du plan de commande GMPLS auquel chaque événement est associé.

2. Noeud selon la revendication 1, l'enregistreur d'événements étant agencé pour envoyer l'indication en utilisant un canal de livraison assurée (330).

3. Noeud selon l'une quelconque des revendications précédentes, l'enregistreur d'événements étant agencé pour envoyer également une indication d'une identité d'un objet topologique auquel les événements sont associés, et comprenant une indication de statut de l'objet en tant que création, suppression, défaillance ou reprise après défaillance.

4. Noeud selon l'une quelconque des revendications précédentes, l'enregistreur d'événements étant agencé pour envoyer l'indication à plusieurs serveurs de journal.

5. Serveur de journal (50) pour un réseau de communication comportant un plan de commande GMPLS réparti sur plusieurs noeuds du réseau, dans lequel chaque noeud a une référence de timing locale synchronisée avec une horloge de réseau commune, le serveur de réseau comprenant :
des interfaces (52) avec plusieurs noeuds pour recevoir des indications d'événements enregistrés à ces noeuds dans le fonctionnement de protocoles du plan de commande GMPLS, et les temps de ces événements selon l'horloge de réseau commune, et une indication du protocole (320, 350, 360) du plan de commande GMPLS auquel chaque événement est associé ;
une mémoire (54) pour mémoriser les indications reçues, et
une partie de commande de présentation (56) pour déterminer une séquence de temps des événements enregistrés à différents noeuds en fonction de leurs temps indiqués, et pour présenter la séquence d'événements à un opérateur,
dans lequel le serveur de journal externe (50) est également synchronisé avec l'horloge de réseau commune.

6. Serveur de journal selon la revendication 5, agencé pour copier (230) les indications reçues sur un autre serveur de journal.

7. Serveur de journal selon la revendication 5 ou 6, situé à un serveur de réseau de connexion de données.

8. Serveur de journal selon la revendication 5 ou 6, situé à l'un des noeuds.

9. Serveur de journal selon l'une quelconque des revendications 5 à 8, réparti sur plusieurs emplacements.

10. Procédé d'enregistrement d'événements à plusieurs noeuds d'un réseau de communication comportant un plan de commande GMPLS réparti sur les noeuds, le procédé comprenant les étapes de :
l'enregistrement (200) d'événements dans le fonctionnement du plan de commande GMPLS aux noeuds,
la détermination d'un temps (210) de chaque événement en utilisant une référence de timing locale synchronisée avec une horloge de réseau commune, et
l'envoi (220) d'indications des noeuds à un serveur de journal des événements enregistrés aux noeuds et des temps des événements, ledit serveur de journal étant à un emplacement différent ;
dans lequel le serveur de journal externe (50) est également synchronisé avec l'horloge de réseau commune ; et
l'envoi d'une indication du protocole (320, 350, 360) du plan de commande GMPLS auquel chaque événement est associé.

11. Procédé selon la revendication 10, comprenant les étapes de :
la réception (250) des indications au serveur de journal, et
la détermination (260) d'une séquence de temps des événements enregistrés à différents noeuds en fonction de leurs temps indiqués.

12. Programme informatique sur un support lisible par ordinateur comportant des instructions qui, lorsqu'elles sont exécutées par un ordinateur, amènent l'ordinateur à effectuer le procédé selon la revendication 10.
